# FASCICULE DE BREVET EUROPEEN

(11) **EP 2 858 833 B1**
(45) Date de publication et mention de la délivrance du brevet: **10.08.2016**
(21) Numéro de dépôt: 13727152.4
(22) Date de dépôt: 05.06.2013
(51) Int. Cl.: B60C 15/04

(54) **TRINGLE HYBRIDE ÉLASTIQUE POUR PNEUMATIQUE**
ELASTISCHER HYBRID-WULSTKERN FÜR REIFEN
HYBRID RESILIENT BEAD WIRE FOR TYRES

(30) Priorité: 07.06.2012 FR 1255294
(43) Date de publication de la demande: 15.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HUYGHE, Jean-Michel, F-63040 Clermont-Ferrand Cedex 9 (FR); BUCHER, Laurent, F-63040 Clermont-Ferrand Cedex 9 (FR); DELFINO, Antonio, F-63040 Clermont-Ferrand Cedex 9 (FR); MERALDI, Jean-Paul, F-63040 Clermont-Ferrand Cedex 9 (FR); RAPENNE, Thibault, F-63040 Clermont-Ferrand Cedex 9 (FR)
(74) Mandataire: Desbordes, Guillaume
(86) Numéro de dépôt international: PCT/EP2013/061584
(87) Numéro de publication internationale: WO 2013/182597

(56) Documents cités:
- EP-A1- 1 657 081
- EP-A1- 1 886 844
- WO-A1-2009/073761

## Description

L'invention concerne les tringles pour pneumatiques, notamment les tringles hybrides, c'est-à-dire comprenant au moins deux matériaux de natures différentes. Elle s'applique à tout type de pneumatiques pour tout type de véhicules.

Un pneumatique comprend, de façon classique, deux bourrelets circonférentiels destinés à permettre l'accrochage du pneumatique sur la jante. Chaque bourrelet comprend une tringle annulaire de renfort.

On connait de l'état de la technique (par exemple EP-A-1 886 844), un pneumatique pour véhicule terrestre comprenant une tringle comprenant une âme et une couche externe d'un fil en acier et enroulé autour de l'âme au contact de cette dernière. L'âme est constituée d'un monofilament en acier. Le monofilament d'acier est cintré sur lui-même et ses deux extrémités soudées afin de former un anneau sensiblement circulaire.

Toutefois, en plus d'un poids relativement élevé, la tringle présente un risque de se déformer plastiquement. Ainsi, à l'issue des étapes de transport ou de stockage durant lesquelles le pneumatique non gonflé est écrasé sous son propre poids ou sous le poids d'autres pneumatiques, il existe un risque qu'au moins une des tringles soit susceptible de présenter une déformation plastique irréversible. Or, une telle déformation peut parfois altérer les propriétés mécaniques de la tringle, ce qui conduit à un serrage perfectible de la tringle autour de la jante, pouvant éventuellement nuire à l'étanchéité ainsi qu'aux performances du pneumatique.

L'invention a pour but une tringle légère et permettant de maintenir les performances du pneumatique.

A cet effet, l'invention a pour objet une tringle à une couche pour pneumatique comprenant :
- une âme comprenant au moins un brin d'une fibre textile multifilamentaire noyée dans une matrice organique,
- une couche externe comprenant un fil métallique enroulé autour et au contact de l'âme.

Grâce à la limite d'élasticité relativement élevée inhérente à la matrice organique, on évite l'éventuelle plastification de la tringle lors des étapes de transport et stockage et on supprime tout risque de déformation plastique.

De plus, la tringle est relativement légère. En effet, la nature du matériau constituant l'âme permet de réduire la masse de la tringle de 15 à 35 % par rapport à celle d'une tringle à âme métallique tout en conservant ses propriétés mécaniques, notamment de force à rupture.

Par définition, une fibre textile est non métallique. Une fibre textile multifilamentaire comprend des filaments textiles élémentaires agencés côte à côte et orientés de façon sensiblement unidirectionnelle. Les filaments élémentaires sont donc sensiblement parallèles entre eux, à quelques chevauchements près.

La fibre textile permet le renforcement de la matrice organique. Une telle fibre est par exemple choisie dans le groupe constitué par les fibres d'alcool polyvinylique, de polyamide aromatique (ou "aramide"), les fibres polyester, polyester aromatique, polyéthylène, les fibres de cellulose, rayonne, viscose, polyphénylène benzobisoxazole (ou "PBO"), polyéthylène naphténate ("PEN"), les fibres de verre, de carbone, de silice, les fibres céramiques, et les mélanges de telle fibres. On préfère utiliser des fibres choisies dans le groupe constitué par les fibres de verre, les fibres de carbone et les mélanges de telles fibres. De préférence, la fibre est une fibre de verre.

Par matrice organique, on entend toute matrice comportant, en poids, plus de 50%, de préférence plus de 75% et plus préférentiellement plus de 90 % de matière organique. La matrice organique peut contenir des minéraux et/ou des métaux provenant de son procédé de fabrication, mais également des additifs minéraux et/ou métalliques volontairement ajoutés. Ainsi, une matrice organique peut, par exemple, être une matrice polymérique thermodurcissable, par exemple à base de polyester insaturé, de polyépoxyde, de dérivé phénolique ou d'aminoplaste, ou encore thermostable, par exemple à base de cyanate, de polybismaléimide, de polyimide, de polyamidoimide, ou encore thermoplastique, par exemple à base de polypropylène, de polyamide, de polyester saturé, de polyoxyméthylène, de polysulfone et polyéthersulfone, de polyéthercétone et polyétheréthercetone, de polysulfure de phénylène, de polyétherimide, ou encore d'élastomère thermoplastique ou réticulé, par exemple à base de polyuréthanne, de silicone ou de caoutchouc ou bien une matrice organique issue d'un mélange de ces matrices.

De préférence, la matrice organique est thermodurcie, de préférence réticulée. Il s'agit par exemple d'une résine réticulable par un rayonnement ionisant, tel que par exemple un rayonnement ultraviolet - visible, un faisceau d'électrons accélérés ou de rayons X. On peut choisir aussi une composition comprenant une résine réticulable par un peroxyde, la réticulation ultérieure pouvant alors être effectuée, le moment venu, au moyen d'un apport de calories, par exemple par l'action de micro-ondes. De préférence, on utilise une composition du type durcissable par un rayonnement ionisant, la polymérisation finale pouvant être déclenchée et contrôlée aisément au moyen d'un traitement ionisant, par exemple de type UV ou UV-visible. A titre de résine réticulable, on utilise plus préférentiellement une résine polyester (i.e., à base de polyester insaturé) ou une résine vinylester. Plus préférentiellement encore, on utilise une résine vinylester.

Dans un mode de réalisation, l'âme comprend un seul brin, et de préférence est constituée d'un seul brin.

Dans une variante, l'âme forme un tore monolithique. Par monolithique, on entend que le tore ne présente aucune discontinuité de matière ou de jointure à l'échelle macroscopique. Le tore étant monolithique, l'âme est moins fragile que l'âme de la tringle de l'état de la technique qui présente une faiblesse au point de soudure de ses extrémités. De préférence, les filaments élémentaires sont répartis de façon homogène dans tout le volume du tore.

Dans une autre variante, l'âme forme un enroulement du brin en plusieurs spires.

Dans un autre mode de réalisation, l'âme comprend plusieurs brins distincts. Le matériau d'âme, du fait de sa haute limite d'élasticité, présente une aptitude élevée à la déformation élastique qui est amplifiée par la pluralité de brins. En effet, en augmentant le nombre de brins et pour une dimension de tringle prédéterminée, on réduit la section de chaque brin, donc la rigidité de la section de chaque brin et on diminue le rayon de courbure critique en flexion de l'âme. La combinaison d'une part, du matériau d'âme et, d'autre part, de la pluralité de brins, permet d'obtenir une tringle présentant une excellente aptitude à la déformation élastique. On évite tout risque de plastification de la tringle.

Dans une variante, les brins sont assemblés par câblage. Dans cette variante, les brins sont enroulés en hélice les uns avec les autres et ne subissent pas de torsion autour de leur propre axe.

Dans une autre variante, les brins sont assemblés par retordage. Dans cette variante, les brins sont enroulés en hélice les uns avec les autres et subissent à la fois une torsion collective et une torsion individuelle autour de leur propre axe, ce qui génère un couple de détorsion sur chacun des brins.

Dans encore une autre variante, l'âme comprend plusieurs tores monolithiques juxtaposés parallèlement les uns aux autres.

Avantageusement, le matériau dans lequel est réalisé chaque brin présente une limite d'élasticité mesurée selon la norme ISO 14125 à 23°C supérieure ou égale à 800 MPa, de préférence à 1000 MPa et plus préférentiellement à 1200 MPa. Grâce à la haute limite d'élasticité du matériau d'âme, on réduit davantage le risque de plastification de la tringle lors des étapes de transport et stockage.

Avantageusement, le matériau dans lequel est réalisé chaque brin présente un module d'Young mesuré selon la norme ISO 14125 à 23°C inférieur ou égal à 100 GPa, de préférence à 75 GPa et plus préférentiellement à 50 GPa. Le faible module d'Young permet d'obtenir une âme résistante en déformation. De préférence, la combinaison de la haute limite d'élasticité et du faible module d'Young confère à l'âme de la tringle une excellente aptitude à la déformation dans le domaine élastique.

Avantageusement, le rapport de la contribution de l'âme à la masse de la tringle sur la contribution de l'âme à la force à rupture de la tringle est strictement inférieur à 1, de préférence inférieur ou égal à 0,8 et plus préférentiellement inférieur ou égal à 0,7. Pour une masse de l'âme relativement faible, la force à rupture de l'âme est relativement élevée. Ainsi, une augmentation relativement faible de la masse de l'âme, et donc de la tringle, engendre une augmentation relativement élevée de la force à rupture.

La contribution de l'âme à la force à rupture est définie par le rapport de la force à rupture de l'âme seule sur la force à rupture de la tringle. La contribution de l'âme à la masse de la tringle est définie par le rapport de la masse de l'âme seule sur la masse de la tringle.

Afin de déterminer le rapport de contribution à la force à rupture, les mesures de force à la rupture de la tringle ou de l'âme (charge maximale en N) peuvent être effectuées par n'importe quel type de méthode généralement utilisée. On pourra par exemple utiliser une méthode conforme à la norme ISO 6892 de 1984 sur un échantillon rectiligne de la tringle ou bien une méthode conforme au test de traction tringle décrit ci-dessous.

Avantageusement, le rapport de la contribution de l'âme à la masse de la tringle sur la contribution de l'âme à la force à rupture de la tringle est supérieur ou égal à 0,25, de préférence à 0,4 et plus préférentiellement à 0,5. Ainsi, la tringle présente une excellente répartition des contributions à la masse et à la force à rupture entre l'âme et la couche externe.

Préférentiellement, le rapport de la contribution de l'âme à la masse de la tringle sur la contribution de l'âme à la force à rupture de la tringle est compris dans au moins un des intervalles [0,25 ; 1[, [0,4 ; 1[, [0,5 ; 1[, [0,25 ; 0,8] [0,4 ; 0,8], [0,5 ; 0,8], [0,25 ; 0,7], [0,4 ; 0,7] et [0,5 ; 0,7].

Plus préférentiellement, le rapport de la contribution de l'âme à la masse de la tringle sur la contribution de l'âme à la force à rupture de la tringle est compris dans l'intervalle [0,5 ; 0,7].

De préférence, la contribution de l'âme à la force à rupture de la tringle est supérieure ou égale à 10 %, de préférence 15 % et plus préférentiellement à 17 %. Ainsi, la contribution de l'âme de la tringle à la force à rupture de la tringle est supérieure à la contribution de l'âme de la tringle de l'état de la technique à la force à rupture de la tringle de l'état de la technique. A propriétés mécaniques constantes, la tringle est donc plus légère.

De façon optionnelle, la contribution de l'âme à la force à rupture de la tringle est inférieure ou égale à 75%. La contribution à la force à rupture reste ainsi relativement bien répartie entre l'âme et la couche externe.

De préférence, la contribution de l'âme à la masse de la tringle est inférieure ou égale à 20%, de préférence à 15% et plus préférentiellement à 10%. Ainsi, la contribution de l'âme de la tringle à la masse de la tringle est inférieure ou égale à la contribution de l'âme de la tringle de l'état de la technique à la masse de la tringle de l'état de la technique.

De façon optionnelle, la contribution de l'âme à la masse de la tringle est supérieure ou égale à 5%. La contribution à la masse reste ainsi majoritairement due à la couche externe.

Avantageusement, le rapport du diamètre du tore défini par l'âme sur le diamètre du tore défini par la tringle est supérieur ou égal à 0,35, de préférence à 0,45, et plus préférentiellement à 0,55. Ainsi, il est possible d'obtenir des tringles comprenant une âme relativement peu encombrante et présentant d'excellentes propriétés mécaniques, notamment de force à rupture.

De préférence, la force à rupture de la tringle est comprise entre 1600 daN et 2700 daN bornes incluses, de préférence entre 1800 daN et 2500 daN bornes incluses et plus préférentiellement entre 2000 daN et 2300 daN bornes incluses.

Les mesures de force à la rupture de la tringle ou de l'âme (charge maximale en N) sont effectuées à 23°C en suivant préférentiellement un test de traction circonférentielle, dit test de traction tringle, sur une machine de traction comprenant douze secteurs mobiles radialement. Au cours de ce test, réalisé dans des conditions quasi-statiques, on positionne la tringle ou l'âme à tester autour des secteurs. Le déplacement simultané et progressif des secteurs a pour effet d'exercer une force radiale d'intensité croissante sur la tringle ou l'âme. Les mouvements des secteurs sont suivis par trois capteurs de force mesurant les forces exercées sur la tringle ou l'âme. La force à rupture est déterminée lorsqu'un élément de la tringle rompt (cas du test sur la tringle) ou lorsque l'âme rompt (cas du test sur l'âme). La fréquence d'acquisition est égale à 100Hz. La valeur de force à rupture retenue est la moyenne des trois valeurs mesurées par les trois capteurs.

Selon des caractéristiques préférentielles de la tringle :
- Le diamètre de chaque brin est compris entre 0,5 et 4 mm.
- Le diamètre de chaque filament élémentaire de chaque fibre textile multifilamentaire est compris entre 2 et 30 µm.
- Chaque fibre textile multifilamentaire est continue. Par continue et par opposition à discontinue, on comprend que pour une longueur prédéterminé de la fibre, par exemple 5 cm, au moins 80% et de préférence au moins 90% des filaments élémentaires de la fibre sont individuellement continus
- Chaque fibre textile multifilamentaire comprend plus de 10 filaments élémentaires, de préférence plus de 100 filaments élémentaires et plus préférentiellement plus de 1000 filaments élémentaires.

Avantageusement, les modules en extension et en flexion du matériau d'âme de la tringle mesurés respectivement selon les normes ASTM D 638 et ASTM D 790 à 23°C sont de préférence supérieurs à 15 GPa, plus préférentiellement supérieurs à 30 GPa, notamment compris entre 30 et 50 GPa bornes incluses.

De préférence, le module en extension de la matrice organique d'âme mesuré selon la norme ASTM D 638 à 23°C est supérieur ou égal à 2.3 GPa, de préférence à 2,5 GPa et plus préférentiellement à 3 GPa. De façon optionnelle, le matériau d'âme a une déformation élastique en compression au moins égal à 2 %, de préférence à 3 %. De préférence, le matériau d'âme a, en flexion, une contrainte de rupture en compression supérieure à la contrainte de rupture en extension.

Les propriétés mécaniques en flexion du matériau d'âme sont mesurées à l'aide d'une machine de traction de la société Instron de type 4466.

Les propriétés en compression sont mesurées sur le matériau d'âme par la méthode dite du test de boucle (D. Sinclair, J. App. Phys. 21, 380 (1950*)*). Dans l'utilisation présente de ce test, on réalise une boucle que l'on amène progressivement au point de rupture. La nature de la rupture, facilement observable en raison de la grande taille de la section, permet immédiatement de se rendre compte de la rupture du matériau d'âme en extension ou en compression.

De préférence, on observe que le matériau d'âme, sollicité en flexion jusqu'à rupture, se rompt du côté où la matière est en extension, ce que l'on identifie par simple observation visuelle.

Etant donné que dans ce cas les dimensions de la boucle sont importantes, il est possible à tout instant de lire le rayon du cercle inscrit dans la boucle. Le rayon du cercle inscrit juste avant le point de rupture correspond au rayon de courbure critique. Il est désigné par Rac. La formule suivante permet ensuite de déterminer par le calcul la déformation élastique critique : ecr = r / (Rac+r) où r correspond au rayon du matériau.

La contrainte de rupture en compression est obtenue par le calcul par la formule suivante: σc = ecr.Me où Me est le module en extension. Puisque, dans le cas du matériau d'âme, la rupture de la boucle apparait dans la partie en extension, on conclut que, en flexion, la contrainte de rupture en compression est supérieure à la contrainte de rupture en extension. On a également procédé à la rupture en flexion d'un barreau rectangulaire selon la méthode dite des trois pannes. Cette méthode correspond à la norme ASTM D 790. Cette méthode permet également de vérifier, visuellement, que la nature de la rupture est bien en extension.

La température de transition vitreuse Tg de la matrice organique d'âme est préférentiellement supérieure à 130°C, plus préférentiellement supérieure à 140°C. La température de transition vitreuse est mesurée selon la norme ASTM D 3418.

La teneur en fibres du matériau d'âme est avantageusement comprise entre 30% et 80% bornes incluses de la masse globale du matériau. De préférence, la teneur en fibres est comprise entre 50% et 80% de la masse du matériau d'âme. La teneur en masse de fibres, exprimée en pour-cent, est calculée en divisant la masse de 1 m de fibres, obtenue à partir du titre, par la masse linéique du matériau d'âme.

Avantageusement, la densité du matériau d'âme est inférieure ou égale à 2.2, de préférence à 2,05 et plus préférentiellement à 1,6. De préférence, la densité du matériau d'âme est comprise entre 1.4 et 2.05 bornes incluses, intervalle dans lequel le matériau présente le meilleur compromis entre masse et propriétés mécaniques, notamment de force à rupture. On mesure la densité du matériau d'âme au moyen d'une balance spécialisée de la société Mettler Toledo de type PG503 DeltaRange. Des échantillons, de quelques centimètres, sont successivement pesés dans l'air et plongés dans du méthanol ; le logiciel de l'appareil détermine ensuite la densité ; la densité est la moyenne de trois mesures.

De préférence, le fil de la couche externe est réalisé en acier. Avantageusement, la teneur en carbone est, en poids, supérieure ou égale à 0,7%, de préférence à 0,8% et plus préférentiellement à 0,9 %.

De telles teneurs en carbone représentent un bon compromis entre les propriétés mécaniques requises et la faisabilité des fils. En particulier, dans le cas d'une teneur en carbone supérieure ou égale à 0,9%, il est possible d'obtenir d'excellentes propriétés mécaniques, notamment de force à rupture.

Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement.

Selon un mode de réalisation préférentiel, l'acier utilisé est recouvert d'une couche de laiton (alliage Zn-Cu) ou de zinc. On rappelle que lors du procédé de fabrication des fils, le revêtement de laiton ou de zinc facilite le tréfilage du fil, ainsi que le collage du fil avec le caoutchouc. Mais les fils pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

L'homme du métier sait comment fabriquer des fils d'acier, en ajustant notamment la composition de l'acier et les taux d'écrouissage final de ces fils, en fonction de ses besoins propres particuliers, en utilisant par exemple des aciers au carbone micro-alliés contenant des éléments d'addition spécifiques tels que Cr, Ni, Co, V, ou divers autres éléments connus (voir par exemple *Research Disclosure* 34984 - *"Micro-alloyed steel cord constructions for tyres" -* mai 1993 ; *Research Disclosure* 34054 - *"High tensile strength steel cord constructions for tyres* " - août 1992).

L'invention a également pour objet un pneumatique comprenant au moins une tringle telle que définie ci-dessus.

De préférence, le pneumatique est pour véhicule terrestre. Par véhicule terrestre, on entend tout véhicule à l'exception des aéronefs. De préférence, le pneumatique est pour véhicule de tourisme.

En variante, le pneumatique est pour aéronef.

L'invention sera mieux comprise à la lecture de la description qui va suivre, donnée uniquement à titre d'exemple non limitatif et faite en se référant aux dessins dans lesquels:
- la figure 1 est une vue en perspective d'un pneumatique selon l'invention;
- les figures 2 à 4 sont des vues en coupe perpendiculaire à l'axe de la tringle (supposée rectiligne et au repos) de tringles respectivement selon des premier, deuxième et troisième modes de réalisation de l'invention;
- la figure 5 est une vue en coupe perpendiculaire à l'axe de la tringle (supposée rectiligne et au repos) d'une tringle de l'état de la technique.

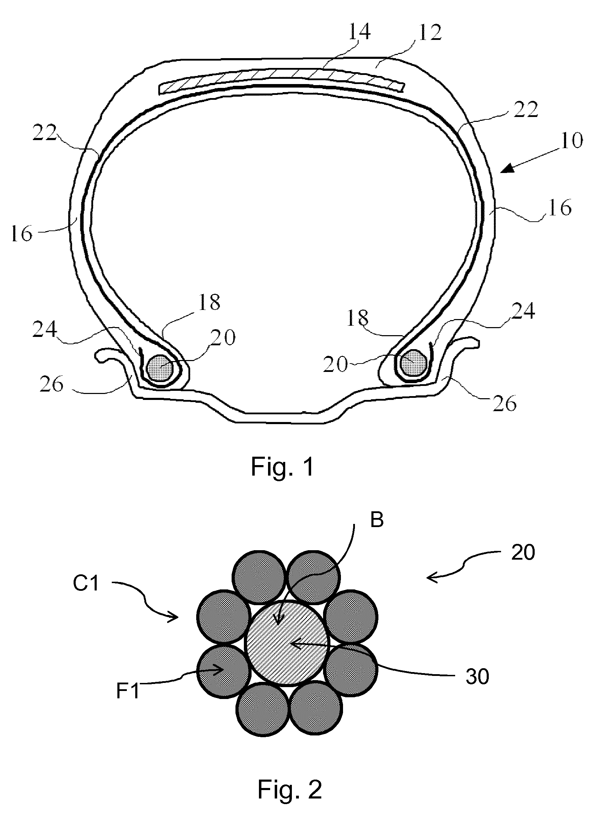

On a représenté sur la figure 1 un pneumatique selon un premier mode de réalisation de l'invention désigné par la référence générale 10. En l'espèce, le pneumatique 10 est destiné à être monté sur un véhicule terrestre, ici un véhicule de tourisme et a pour dimensions 205/55 R16. En variante, le pneumatique 10 est un pneumatique pour aéronef.

Le pneumatique 10 comporte un sommet 12 renforcé par une armature de sommet 14, deux flancs 16 et deux bourrelets 18, chacun de ces bourrelets 18 étant renforcé avec une tringle 20 annulaire. Le sommet 14 est surmonté d'une bande de roulement non représentée sur cette figure schématique. Une armature de carcasse 22 est enroulée autour des deux tringles 20 dans chaque bourrelet 18 et comprend un retournement 24 disposé vers l'extérieur du pneumatique 20 qui est ici représenté monté sur une jante 26. L'armature de carcasse 22 est constituée d'au moins une nappe renforcée par des câbles. L'armature 22 est du type radial.

Chaque tringle 20 a une forme générale toroïdale et présente une section sensiblement circulaire. En variante, la tringle 20 présente une section polygonale, par exemple, carré, rectangulaire ou hexagonale ou bien encore une section elliptique ou oblongue.

On a représenté sur la figure 2 une tringle 20 à une couche selon l'invention.

La tringle 20 comprend une âme 30 et une couche externe C1. Le diamètre Dt du tore défini par la tringle 20 est égal à 4,8 mm. La tringle 20 est du type à une couche, c'est-à-dire qu'il n'existe pas de couche radialement externe à la couche C1 qui serait agencée autour de la couche C1, ni de couche radialement interne à la couche externe C1 qui serait agencée entre l'âme 30 et la couche externe C1.

L'âme 30 comprend un seul brin, et ici est constituée d'un seul brin B. Le diamètre du brin B est compris entre 0,5 et 4 mm, de préférence entre 2 et 3 mm.

Le brin forme un tore monolithique. L'âme 30 présente une section sensiblement circulaire et le diamètre Da du tore défini par l'âme 30 est égal à 2,16 mm. L'âme 30 est réalisée dans un matériau d'âme Ma et comprend une fibre textile multifilamentaire noyée dans une matrice organique.

La fibre textile multifilamentaire est une fibre de verre et la matrice organique d'âme est une résine thermodurcie La fibre textile multifilamentaire est continue. En variante, la fibre textile est discontinue.

La fibre de verre comprend plus de 10 filaments élémentaires de verre, de préférence plus de 100 et plus préférentiellement plus de 1000 filaments élémentaires agencés côte à côte et donc sensiblement parallèles entre eux, à quelques chevauchements près. Le diamètre de chaque filament élémentaire de la fibre textile est compris entre 2 et 30 µm.

Le matériau d'âme Ma présente une limite d'élasticité Re mesurée selon la norme ISO 14125 à 23°C supérieure ou égale à 800 MPa, de préférence à 1000 MPa et plus préférentiellement à 1200 MPa.

La fibre de verre utilisée peut être du type « E » ou « R ».

La résine thermodurcie est du type vinylester. Sans que cette définition soit limitative, la résine vinylester est préférentiellement du type époxyvinylester. On utilise plus préférentiellement une résine vinylester, notamment du type époxyde, qui au moins pour partie est à base (c'est-à-dire greffée sur une structure du type) novolaque (encore appelée phénoplaste) et/ou bisphénolique, soit préférentiellement une résine vinylester à base novolaque, bisphénolique, ou novolaque et bisphénolique, telle que décrite par exemple dans les demandes EP 1 074 369 et EP 1 174 250. Une résine époxyvinylester de type novolaque et bisphénolique a montré d'excellents résultats ; à titre d'exemples, on peut citer notamment les résines vinylester "ATLAC 590" ou "ATLAC E-Nova FW 2045" de la société DSM (diluées toutes deux avec du styrène). De telles résines époxyvinylester sont disponibles chez d'autres fabricants tels que Reichhold, Cray Valley, UCB.

L'âme 30 est fabriquée par exemple par imprégnation de la fibre comme décrit dans le document US 3,730,678 ou bien par injection de la matrice organique dans un moule où l'on a préalablement disposé la fibre ou bien comme décrit dans le document EP1167080.

La couche C1 comprend un fil F1 métallique enroulé en hélice autour de l'âme 30. Le fil F1 de la couche C1 est enroulé au contact de l'âme 30 et présente un diamètre Df égal à 1,30 mm. Le fil F1 est réalisé dans un acier dont la teneur en carbone est supérieure ou égale à 0,7% en poids de l'acier, de préférence à 0,8% et plus préférentiellement à 0,9%, ici égale à 0.7 %. Le fil F1 est enroulé sur plusieurs tours, ici sur 8 tours, de sorte que la couche C1 soit saturée, c'est-à-dire qu'il n'existe pas suffisamment de place entre les enroulements adjacents pour pouvoir insérer un enroulement supplémentaire. On relie les deux extrémités du fil de la couche au moyen d'un manchon.

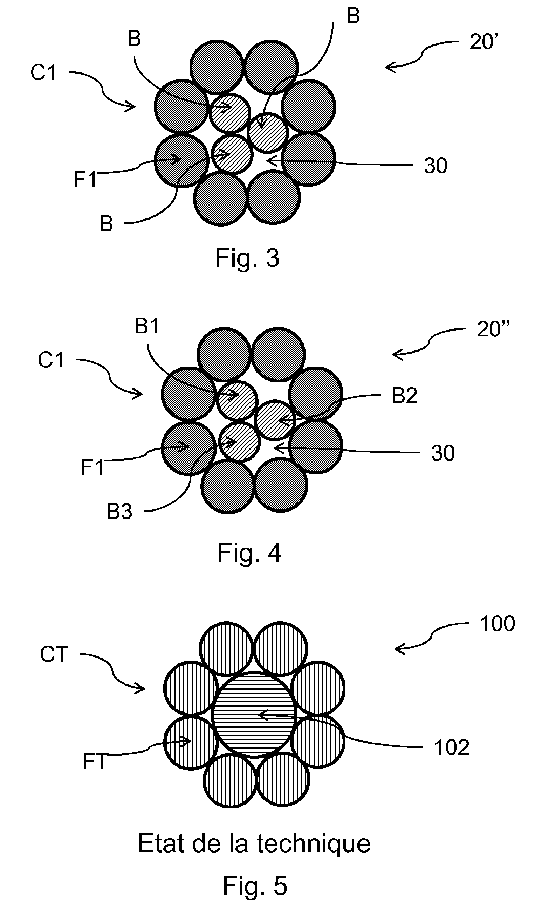

On a représenté sur la figure 3 une tringle 20' selon un deuxième mode de réalisation de l'invention. Les éléments analogues à ceux représentés en référence au mode de réalisation précédent sont désignés par des références identiques.

A la différence de la tringle 20 selon le premier mode de réalisation, l'âme 30 de la tringle 20' selon le deuxième mode de réalisation forme un enroulement de plusieurs spires. En l'espèce, l'âme 30 comprend plusieurs spires d'un unique brin B. Ces spires ont un axe est commun avec celui de la tringle 20. Ainsi, chaque spire prend, en projection dans un plan perpendiculaire à l'axe de la tringle, une forme générale circulaire.

Le brin B est trancanné sur plusieurs tours de sorte que l'âme 30 présente une section sensiblement polygonale, ici triangulaire. Le brin B est réalisé dans le matériau d'âme Ma décrit dans le mode de réalisation précédent. Le diamètre de chaque spire est compris entre 0,5 et 3 mm, de préférence entre 1 et 2 mm.

Le diamètre Dt du tore défini par la tringle 20' est égal à 5,8 mm. Le diamètre Da du tore défini par l'âme 30 et dans lequel est inscrite l'âme 30 est égal à 3,28 mm. Le fil F1 présente un diamètre Df égal à 1,55 mm. On a représenté sur la figure 4 une tringle 20" selon un troisième mode de réalisation de l'invention. Les éléments analogues à ceux représentés en référence aux modes de réalisation précédents sont désignés par des références identiques.

A la différence de la tringle 20' selon le deuxième mode de réalisation, l'âme 30 comprend plusieurs brins B1, B2, B3 distincts. Chaque brin B1, B2, B3 forme un tore monolithique dont l'axe est commun avec celui de la tringle 20. L'âme 30 comprend donc plusieurs tores monolithiques juxtaposés parallèlement les uns aux autres. Les tores sont accolés de sorte que l'âme 30 présente une section sensiblement polygonale, ici triangulaire.

Le diamètre Dt du tore défini par la tringle 20" est égal à 6 mm. Le diamètre Da du tore défini par l'âme 30 et dans lequel est inscrite l'âme 30 est égal à 3,60 mm. Le fil F1 présente un diamètre Df égal à 1,55 mm. Le diamètre de chaque brin B1, B2, B3 est compris entre 0,5 et 3 mm, de préférence entre 1 et 2 mm.

Tous les brins B1, B2, B3 sont réalisés dans le même matériau d'âme. Par exemple, les brins B1, B2, B3 sont réalisés dans le matériau Ma du brin B. En variante, les brins B1, B2, B3 sont réalisés dans au moins deux matériaux d'âme différents, chacun des matériaux comprenant au moins une fibre textile multifilamentaire noyée dans une matrice organique et présentant, de préférence,une limite d'élasticité mesurée selon la norme ISO 14125 à 23°C supérieure ou égale à 800 MPa, de préférence à 1000 MPa et plus préférentiellement à 1200 MPa.

Le pneumatique 10 illustré à la figure 1 comprend deux tringles 20 selon le premier mode de réalisation. Des pneumatiques 10', 10" analogues selon des deuxième et troisième modes de réalisation (non représentés) comprennent respectivement deux tringles 20', 20" selon le mode de réalisation correspondant.

On a représenté sur la figure 5 une tringle de l'état de la technique désignée par la référence générale 100.

Contrairement à la tringle selon l'invention, la tringle 100 de l'état de la technique comprend une âme 102 métallique constituée d'un fil FT réalisé dans un acier dont la teneur en carbone est égale à 0,1%. Le diamètre Da du tore défini par l'âme 102 est égal à 2,15 mm. Cette tringle 100 comprend une couche externe CT comprenant un fil en acier enroulé autour de l'âme. Le fil FT de la couche externe CT présente un diamètre Df égal à 1,30 mm et est réalisé en acier dont la teneur en carbone est égale à 0.7%. Le diamètre du tore Dt défini par la tringle 100 est égal à 4,8 mm.

### MESURES COMPARATIVES

On a comparé les tringles 20, 20', 20" selon les différents modes de réalisation et la tringle 100 de l'état de la technique. On a également comparé les pneumatiques 10, 10', 10" selon les différents modes de réalisation et un pneumatique de l'état de la technique comprenant deux tringles 100 de l'état de la technique.

On a résumé dans le tableau 1 ci-dessous les caractéristiques issues des mesures réalisées.

**Tableau 1**

| **Tringle testée** | **Tringle 100** | **Tringle 20** | **Tringle 20'** | **Tringle 20**" |
|---|---|---|---|---|
| Masse | 149 g | 124 g | 101 g | 101 g |
| Force à rupture (Fm) | 1875 daN | 2051 daN | 2140 daN | 2200 daN |
| Pression d'éclatement | > 17 bars | > 17 bars | > 17 bars | > 17 bars |
| Limite d'élasticité du matériau d'âme (Re) | 700 MPa | > 1000 MPa | > 1000 MPa | > 1000 MPa |
| Module d'Young (E) | 205 GPa | 40 GPa | 40 GPa | 40 GPa |
| Diamètre de la tringle (Dt) | 4,8 mm | 4,8 mm | 5,8 mm | 6,0 mm |
| Diamètre de l'âme (Da) | 2,15 mm | 2,16 mm | 3,28 mm | 3,60 mm |
| Rd=Da/Dt | 0,45 | 0,45 | 0,57 | 0,6 |
| Contribution de l'âme à la force à rupture de la tringle (Rf) | 11 % | 16% | 13% | 14% |
| Contribution de l'âme à la masse de la tringle (Rm) | 25% | 10% | 8% | 9% |
| R=Rm/Rf | 2,27 | 0,63 | 0,62 | 0,64 |

Chaque tringle 20, 20', 20" permet, à diamètre constant, de maintenir d'excellentes caractéristiques mécaniques, notamment de force à rupture, tout en réduisant de 17% (tringle 20) et 32 % (tringles 20', 20") la masse de la tringle de l'état de la technique et en évitant tout risque de déformation plastique irréversible.

En effet, le matériau d'âme de chaque tringle 20, 20', 20" présente une limite d'élasticité Re mesurée selon la norme ISO 14125 à 23°C supérieure ou égale à 800 MPa, de préférence à 1000 MPa et plus préférentiellement à 1200 MPa.

Le matériau d'âme Ma de chaque tringle 20, 20', 20" présente un module d'Young E mesuré selon la norme ISO 14125 à 23°C inférieur ou égal à 100 GPa, de préférence à 75 GPa et plus préférentiellement à 50 GPa.

Par ailleurs, chaque pneumatique 10, 10', 10" présente une résistance à l'éclatement identique au pneumatique de l'état de la technique.

La force à la rupture Fm de chaque tringle 20, 20', 20" est comprise entre 1600 daN et 2700 daN bornes incluses, de préférence entre 1800 daN et 2500 daN bornes incluses et plus préférentiellement entre 2000 daN et 2300 daN bornes incluses. Ainsi, avec une masse bien inférieure à celle de la tringle 100 de l'état de la technique, chaque tringle 20, 20', 20" présente une force à rupture supérieure à celle de la tringle 100.

Le rapport Rd du diamètre Da du tore défini par l'âme 30 sur le diamètre Dt du tore défini par la tringle 20 est supérieur ou égal à 0,35, de préférence à 0,45. Pour les tringles 20', 20", le rapport Rd est supérieur ou égal à 0,55.

La contribution Rf de l'âme 30 à la force à rupture Fm de chaque tringle 20, 20', 20" est supérieure ou égale à 10 %, de préférence 15 %. Dans un autre mode de réalisation non illustré, la contribution Rf est supérieure ou égale à 17 %. Cette contribution Rf est inférieure ou égale à 75% pour les tringles 20, 20', 20".

A contribution de l'âme à la masse de la tringle inférieure, l'âme de chaque tringle 20, 20', 20" présente une contribution la force à rupture de la tringle plus élevée.

La contribution Rm de l'âme 30 à la masse de chaque tringle 20, 20', 20" est inférieure ou égale à 20 %, de préférence à 15 % et plus préférentiellement à 10 %. Cette contribution Rm est supérieure ou égale à 5% pour les tringles 20, 20', 20".

Le rapport R de la contribution Rm sur la contribution Rf est inférieur ou égal à 1, de préférence à 0,8 et plus préférentiellement à 0,7. Ce rapport R est supérieur ou égal à 0,25, de préférence à 0,4 et plus préférentiellement à 0,5. Ainsi, R appartient à l'intervalle [0,5 ; 0,7] pour les tringles 20, 20', 20".

L'invention ne se limite pas aux modes de réalisation précédemment décrits.

En effet, la tringle selon l'invention peut être montée sur tout type de pneumatique. Par exemple, la tringle peut être destinée à un pneumatique pour des véhicules industriels choisis parmi les camionnettes, des véhicules lourds tels que "Poids lourd" - i.e., métro, bus, engins de transport routier (camions, tracteurs, remorques), véhicules hors-la-route, aéronefs -, engins agricoles ou de génie civil, autres véhicules de transport ou de manutention.

Dans un mode de réalisation, l'âme comprend plusieurs brins distincts assemblés par câblage ou retordage.

En outre, les caractéristiques des différents modes de réalisation peuvent être indifféremment combinées les unes avec les autres lorsque celles-ci sont compatibles entre elles.

On notera qu'il est possible d'exploiter une tringle à une couche pour pneumatique comprenant :
- une âme réalisée dans au moins un matériau d'âme présentant une limite d'élasticité mesurée selon la norme ISO 14125 à 23°C supérieure ou égale à 800 MPa, de préférence à 1000 MPa et plus préférentiellement à 1200 MPa, et
- une couche externe comprenant un fil enroulé autour et au contact de l'âme, indépendamment du fait que la tringle comprenne :
- une âme comprenant au moins un brin d'une fibre textile multifilamentaire noyée dans une matrice organique,
- une couche externe comprenant un fil métallique enroulé autour et au contact de l'âme.

## Revendications

1. Tringle (20, 20', 20") à une couche pour pneumatique (10), comprenant:
- une âme (30) comprenant au moins un brin (B) d'une fibre textile multifilamentaire noyée dans une matrice organique,
- une couche externe (C1) comprenant un fil (F1) métallique enroulé autour et au contact de l'âme (30).

2. Tringle (20, 20', 20") selon la revendication 1, dans laquelle l'âme (30) comprend un seul brin (B).

3. Tringle (20, 20', 20") selon la revendication 1, dans laquelle l'âme (30) comprend plusieurs brins distincts (B1, B2, B3).

4. Tringle (20, 20', 20") selon l'une quelconque des revendications précédentes, dans laquelle le matériau (Ma) dans lequel est réalisé chaque brin (B ; B1, B2 , B3) présente une limite d'élasticité (Re) mesurée selon la norme ISO 14125 à 23°C supérieure ou égale à 800 MPa, de préférence à 1000 MPa et plus préférentiellement à 1200 MPa.

5. Tringle (20, 20', 20") selon l'une quelconque des revendications précédentes, dans laquelle le matériau (Ma) dans lequel est réalisé chaque brin (B ; B1, B2 , B3) présente un module d'Young (E) mesuré selon la norme ISO 14125 à 23°C inférieur ou égal à 100 GPa, de préférence à 75 GPa et plus préférentiellement à 50 GPa.

6. Tringle (20, 20', 20") selon l'une quelconque des revendications précédentes, dans laquelle le rapport (R) de la contribution (Rm) de l'âme (30) à la masse de la tringle (20, 20', 20") sur la contribution (Rf) de l'âme (30) à la force à rupture (Fm) de la tringle (20, 20', 20") est strictement inférieur à 1, de préférence inférieur ou égal à 0,8 et plus préférentiellement inférieur ou égal à 0,7.

7. Tringle (20, 20', 20") selon l'une quelconque des revendications précédentes, dans laquelle le rapport (R) de la contribution (Rm) de l'âme (30) à la masse de la tringle (20, 20', 20") sur la contribution (Rf) de l'âme (30) à la force à rupture (Fm) de la tringle (20, 20', 20") est supérieur ou égal à 0,25, de préférence à 0,4 et plus préférentiellement à 0,5.

8. Tringle (20, 20', 20") selon l'une quelconque des revendications précédentes, dans laquelle la contribution (Rf) de l'âme (30) à la force à rupture (Fm) de la tringle (20, 20', 20") est supérieure ou égale à 10 %, de préférence 15 % et plus préférentiellement à 17 %.

9. Tringle (20, 20', 20") selon l'une quelconque des revendications précédentes, dans laquelle la contribution (Rf) de l'âme (30) à la force à rupture (Fm) de la tringle (20, 20', 20") est inférieure ou égale à 75%.

10. Tringle (20, 20', 20") selon l'une quelconque des revendications précédentes, dans laquelle la contribution (Rm) de l'âme (30) à la masse de la tringle (20, 20', 20") est inférieure ou égale à 20 %, de préférence à 15 % et plus préférentiellement à 10 %.

11. Tringle (20, 20', 20") selon l'une quelconque des revendications précédentes, dans laquelle la contribution (Rm) de l'âme (30) à la masse de la tringle (20, 20', 20") est supérieure ou égale à 5%.

12. Tringle (20, 20', 20") selon l'une quelconque des revendications précédentes, dans laquelle le rapport (Rd) du diamètre (Da) du tore défini par l'âme (30) sur le diamètre (Dt) du tore défini par la tringle (20, 20', 20") est supérieur ou égal à 0,35, de préférence à 0,45, et plus préférentiellement à 0,55.

13. Tringle (20, 20', 20") selon l'une quelconque des revendications précédentes, dans laquelle chaque fibre textile multifilamentaire est choisie dans le groupe constitué par les fibres de verre, de carbone, de silice, de céramique, et les mélanges de telles fibres, de préférence dans le groupe constitué par les fibres de verre, de carbone et les mélanges de telles fibres, et plus préférentiellement chaque fibre textile multifilamentaire est une fibre de verre.

14. Tringle (20, 20', 20") selon l'une quelconque des revendications précédentes, dans laquelle la matrice organique est du type thermodurcie, de préférence réticulée et plus préférentiellement du type vinylester.

15. Pneumatique (10, 10', 10"), **caractérisé en ce qu'**il comprend au moins une tringle (20) selon l'une quelconque des revendications précédentes.

## Patentansprüche

1. Drahtseil (20, 20', 20") mit einer Schicht für Luftreifen (10), das Folgendes umfasst:
- einen Kern (30), der wenigstens einen Strang (B) einer Multifilament-Textilfaser, die in einen organischen Grundstoff eingebettet ist, enthält,
- eine äußere Schicht (C1), die einen Metalldraht (F1) enthält, der um den Kern (30) gewickelt und damit in Kontakt ist.

2. Drahtseil (20, 20', 20") nach Anspruch 1, wobei der Kern (30) einen einzigen Strang (B) umfasst.

3. Drahtseil (20, 20', 20") nach Anspruch 1, wobei der Kern (30) mehrere verschiedene Stränge (B1, B2, B3) umfasst.

4. Drahtseil (20, 20', 20") nach einem der vorhergehenden Ansprüche, wobei das Material (Ma), aus dem jeder Strang (B; B1, B2, B3) verwirklicht ist, eine Elastizitätsgrenze (Re), die gemäß der Norm ISO 14125 bei 23 °C gemessen wird, aufweist, die größer oder gleich 800 MPa, vorzugsweise 1000 MPa und am stärksten bevorzugt 1200 MPa ist.

5. Drahtseil (20, 20', 20") nach einem der vorhergehenden Ansprüche, wobei das Material (Ma), aus dem jeder Strang (B; B1, B2, B3) verwirklicht ist, einen Y-oung-Modul (E), der gemäß der Norm ISO 14125 bei 23 °C gemessen wird, aufweist, der kleiner oder gleich 100 GPa, vorzugsweise 75 GPa und am stärksten bevorzugt 50 GPa ist.

6. Drahtseil (20, 20', 20") nach einem der vorhergehenden Ansprüche, wobei das Verhältnis (R) des Beitrags (Rm) des Kerns (30) zur Masse des Drahtseils (20, 20', 20") zum Beitrag (Rf) des Kerns (30) zur Bruchkraft (Fm) des Drahtseils (20, 20', 20") streng kleiner als 1, vorzugsweise kleiner oder gleich 0,8 und am stärksten bevorzugt kleiner oder gleich 0,7 ist.

7. Drahtseil (20, 20', 20") nach einem der vorhergehenden Ansprüche, wobei das Verhältnis (R) des Beitrags (Rm) des Kerns (30) zur Masse des Drahtseils (20, 20', 20") zum Beitrag (Rf) des Kerns (30) zur Bruchkraft (Fm) des Drahtseils (20, 20', 20") größer oder gleich 0,25, vorzugsweise 0,4 und am stärksten bevorzugt 0,5 ist.

8. Drahtseil (20, 20', 20") nach einem der vorhergehenden Ansprüche, wobei der Beitrag (Rf) des Kerns (30) zur Bruchkraft (Fm) des Drahtseils (20, 20', 20") größer oder gleich 10 %, vorzugsweise 15 % und am stärksten bevorzugt 17 % ist.

9. Drahtseil (20, 20', 20") nach einem der vorhergehenden Ansprüche, wobei der Beitrag (Rf) des Kerns (30) zur Bruchkraft (Fm) des Drahtseils (20, 20', 20") kleiner oder gleich 75 % ist.

10. Drahtseil (20, 20', 20") nach einem der vorhergehenden Ansprüche, wobei der Beitrag (Rm) des Kerns (30) zur Masse des Drahtseils (20, 20', 20") kleiner oder gleich 20 %, vorzugsweise 15 % und am stärksten bevorzugt 10 % ist.

11. Drahtseil (20, 20', 20") nach einem der vorhergehenden Ansprüche, wobei der Beitrag (Rm) des Kerns (30) zur Masse des Drahtseils (20, 20', 20") größer oder gleich 5 % ist.

12. Drahtseil (20, 20', 20") nach einem der vorhergehenden Ansprüche, wobei das Verhältnis (Rd) des Durchmessers (Da) des Ringwulsts, der durch den Kern (30) definiert ist, zum Durchmesser (Dt) des Ringwulsts, der durch das Drahtseil (20, 20', 20") definiert ist, größer oder gleich 0,35, vorzugsweise 0,45 und am stärksten bevorzugt 0,55 ist.

13. Drahtseil (20, 20', 20") nach einem der vorhergehenden Ansprüche, wobei jede Multifilament-Textilfaser aus der Gruppe gewählt ist, die aus Glasfasern, Kohlenstofffasern, Siliciumoxidfasern, Keramikfasern und Gemischen aus diesen Fasern gebildet ist, vorzugsweise aus der Gruppe gewählt ist, die aus Glasfasern, Kohlenstofffasern und Gemischen aus diesen Fasern gebildet ist, und am stärksten bevorzugt jede Multifilament-Textilfaser eine Glasfaser ist.

14. Drahtseil (20, 20', 20") nach einem der vorhergehenden Ansprüche, wobei der organische Grundstoff vom wärmegehärteten Typ ist, der vorzugsweise vernetzt ist und am stärksten bevorzugt vom Vinylester-Typ ist.

15. Luftreifen (10, 10', 10"), **dadurch gekennzeichnet, dass** er wenigstens ein Drahtseil (20) nach einem der vorhergehenden Ansprüche umfasst.

## Claims

1. Single-layer bead wire (20, 20', 20") for a tyre (10) comprising:
- a core (30) comprising at least one yarn (B) of a multifilament textile fibre embedded in an organic matrix,
- an outer layer (C1) comprising a metal wire (F1) wound around and in contact with the core (30).

2. Bead wire (20, 20', 20") according to Claim 1, wherein the core (30) comprises a single yarn (B).

3. Bead wire (20, 20', 20") according to Claim 1, wherein the core (30) comprises a plurality of separate yarns (B1, B2, B3).

4. Bead wire (20, 20', 20") according to any one of the preceding claims, wherein the material (Ma) of which each yarn (B; B1, B2, B3) is made has a yield strength (Re) measured in accordance with the standard ISO 14125 at 23°C greater than or equal to 800 MPa, preferably greater than or equal to 1000 MPa and more preferably greater than or equal to 1200 MPa.

5. Bead wire (20, 20', 20") according to any one of the preceding claims, wherein the material (Ma) of which each yarn (B; B1, B2, B3) is made has a Young's modulus (E) measured in accordance with the standard ISO 14125 at 23°C less than or equal to 100 GPa, preferably less than or equal to 75 GPa and more preferably less than or equal to 50 GPa.

6. Bead wire (20, 20', 20") according to any one of the preceding claims, wherein the ratio (R) of the contribution (Rm) of the core (30) to the mass of the bead wire (20, 20', 20") to the contribution (Rf) of the core (30) to the force at break (Fm) of the bead wire (20, 20', 20") is strictly less than 1, preferably less than or equal to 0.8 and more preferably less than or equal to 0.7.

7. Bead wire (20, 20', 20") according to any one of the preceding claims, wherein the ratio (R) of the contribution (Rm) of the core (30) to the mass of the bead wire (20, 20', 20") to the contribution (Rf) of the core (30) to the force at break (Fm) of the bead wire (20, 20', 20") is greater than or equal to 0.25, preferably greater than or equal to 0.4 and more preferably greater than or equal to 0.5.

8. Bead wire (20, 20', 20") according to any one of the preceding claims, wherein the contribution (Rf) of the core (30) to the force at break (Fm) of the bead wire (20, 20', 20") is greater than or equal to 10%, preferably greater than or equal to 15% and more preferably greater than or equal to 17%.

9. Bead wire (20, 20', 20") according to any one of the preceding claims, wherein the contribution (Rf) of the core (30) to the force at break (Fm) of the bead wire (20, 20', 20") is less than or equal to 75%.

10. Bead wire (20, 20', 20") according to any one of the preceding claims, wherein the contribution (Rm) of the core (30) to the mass of the bead wire (20, 20', 20") is less than or equal to 20%, preferably less than or equal to 15% and more preferably less than or equal to 10%.

11. Bead wire (20, 20', 20") according to any one of the preceding claims, wherein the contribution (Rm) of the core (30) to the mass of the bead wire (20, 20', 20") is greater than or equal to 5%.

12. Bead wire (20, 20', 20") according to any one of the preceding claims, wherein the ratio (Rd) of the diameter (Da) of the torus defined by the core (30) to the diameter (Dt) of the torus defined by the bead wire (20, 20', 20") is greater than or equal to 0.35, preferably greater than or equal to 0.45 and more preferably greater than or equal to 0.55.

13. Bead wire (20, 20', 20") according to any one of the preceding claims, wherein each multifilament textile fibre is chosen from the group consisting of glass fibres, carbon fibres, silica fibres, ceramic fibres, and mixtures of such fibres, preferably from the group consisting of glass fibres, carbon fibres and mixtures of such fibres, and more preferably each multifilament textile fibre is a glass fibre.

14. Bead wire (20, 20', 20") according to any one of the preceding claims, wherein the organic matrix is of the thermoset type, preferably crosslinked and more preferably of the vinyl ester type.

15. Tyre (10, 10', 10"), **characterized in that** it comprises at least one bead wire (20) according to any one of the preceding claims.
